# EUROPÄISCHE PATENTSCHRIFT

(11) **EP 0 635 405 B1**
(45) Veröffentlichungstag und Bekanntmachung des Hinweises auf die Patenterteilung: **21.05.1997**
(21) Anmeldenummer: 94111378.9
(22) Anmeldetag: 21.07.1994
(51) Int. Cl.: B60R 22/18

(54) **Motorcaravan mit einer Befestigungsvorrichtung für Sicherheitsgurte**
Automotive camper with a seatbelt fastening system
Auto-caravane avec dispositif de fixation de ceintures de sécurité

(30) Priorität: 21.07.1993 DE 4324420; 30.09.1993 DE 4333463
(43) Veröffentlichungstag der Anmeldung: 25.01.1995
(73) Patentinhaber: DETHLEFFS GmbH, D-88316 Isny (DE)
(72) Erfinder: Schmidt, Gerhard, D-88316 Isny (DE)
(74) Vertreter: Patentanwälte Eisele, Otten & Roth

(56) Entgegenhaltungen:
- DE-A- 2 166 310
- DE-A- 3 719 656
- US-A- 2 740 642
- US-A- 2 891 804
- US-A- 3 885 810

## Beschreibung

Die Erfindung betrifft einen Motorcaravan mit einer Befestigungsvorrichtung für Sicherheitsgurte. Dabei geht es nicht um die Befestigung der Sicherheitsgurte für Fahrer und Beifahrer, da für die Vordersitze die Technologie des allgemeinen Fahrzeugbaus Anwendung finden kann, d. h. es sind metallene Sitzkonstruktionen vorgesehen. Die Sitzplätze im Wohnbereich hingegen sind meist nur in Holzkonstruktion ausgeführt und auch die umgebenden Einbaumöbel bestehen gewöhnlich nur aus Sperrholz und Spanplatten, die nur wenig belastbar sind.

Aus der DE-U-91 14 531 ist es bekannt, Sicherheitsgurte für die hinteren Sitzplätze an stabilen Stützböcken zu befestigen, die mittels durchgehender Schrauben und einer Gegenhalterung an der Bodenplatte befestigt sind. Die Stützböcke haben eine Winkelform und sind aus metallenen Profilrohren zusammengeschweißt. Sie werden in den Sitztruhen angeordnet, haben somit nur deren Höhe und eignen sich somit nur zum Anbringen von Beckengurten. Die Montage der Böcke ist verhältnismäßig kompliziert durch die Vielzahl der Befestigungsschrauben. Die als Gegenhalterungen erforderlichen Schienen erfordern unter der Bodenplatte viel Platz, der oft erst durch Verlagerung anderer dort vorgesehener Komponenten geschaffen werden muß. Der Stauraum in den Sitztruhen wird durch die schräg angeordneten Streben erheblich verringert.

Ferner zeigt die gattungsbildende DE-A 43 16 930 eine Sitzbank für Wohnmobile, hinter der eine aufrechte Säule vorgesehen ist, die an ihrem oberen Endbereich Anlenkpunkte für Sicherheitsgurte aufweist und an ihrem unteren Ende einen Anschlußflansch zur Verbindung mit dem metallenen Fahrzeugrahmen aufweist. Hiermit ist zwar eine Möglichkeit zur Befestigung von Schultergurten gegeben, wegen der beträchtlichen Biegekräfte am unteren Ende der Säule, deren oberes Ende nicht abgestützt ist, muß diese aber sehr massiv ausgeführt werden, was das Fahrzeuggewicht erhöht und die Nutzung des Innenraumes erschwert. Vor allem ist dieser Vorschlag für solche Sitzbänke in einem Motorcaravan ungeeignet, die nicht über einem Längsholm des Chassis angeordnet sind, so daß die Säule nicht angemessen befestigt werden kann.

Der Erfindung liegt die Aufgabe zugrunde, eine Befestigungsvorrichtung für Sicherheitsgurte vorzuschlagen, die ein relativ geringes Gewicht hat, sich leicht in die Möbeleinbauten integrieren läßt und an jeder beliebigen Stelle des Motorcaravan-Grundrisses angebracht werden kann.

Diese Aufgabe wird erfindungsgemäß durch die Merkmale des Patentanspruchs 1 gelöst. Danach wird die Haltestange an beiden Enden abgestützt. Die im Kollisionsfall an den Gurten und an der Stange wirkenden Zugkräfte werden sowohl in die Bodenplatte als auch in das Dach des Wohnwagens eingeleitet. Es besteht aber keine unmittelbare Verbindung zwischen der Stange und dem Fahrzeugchassis. Es hat sich gezeigt, daß zweckmäßig ausgewählte Einlagen in der Dach- und Bodenplatte durchaus geeignet sind, die von diesen Platten aufnehmbaren Kräfte sinnvoll einzuleiten. Da die Stange an beiden Enden abgestützt ist, braucht sie im Querschnitt nur so stark bemessen zu werden, daß sie sich nicht völlig durchbiegt. Eine gewisse Biegeverformung ist erwünscht, da die Verformungsarbeit den Stoß dämpft.

Verglichen mit der Grundfläche eines Wohnwagens ist der Querschnitt der Stange minimal. Sie läßt sich in raumhohen Einbauten bzw. an den Seitenwänden des Wohnwagenaufbaus ohne weiteres, gegebenenfalls auch nachträglich, anbringen. Für den Einbau kommt z.B. ein Kleiderschrank in Betracht, der sich nicht selten hinter einer in Fahrtrichtung orientierten Zweier-Sitzgruppe befindet. Aber auch wenn die Stange an einer Trennwand oder an der Seitenwand angeordnet ist, läßt sie sich leicht dekorativ verkleiden. Allgemein kann man sagen, daß eine vertikale Stange eine vom Grundriß des Wohnwagens weitgehend unabhängige Befestigungsvorrichtung darstellt.

Als Einlagen in die Dach- und Bodenplattenkonstruktion eignen sich Holzleisten, welche insoweit den darin enthaltenen Hartschaumstoffkern gleicher Dicke ersetzen. Derartige Holzeinlagen sind an sich bekannt und werden immer schon an stark belasteten Stellen verwendet, wo Innenwände oder Möbel an Dach und Boden befestigt werden müssen. Vorzugsweise erstrecken sich die eingelegten Holzleisten zur Abstützung der Gurthaltestange quer zur Fahrtrichtung und vorzugsweise über die ganze Wagenbreite. Es können aber auch längsgerichtete Stützleisten vorgesehen sein, die sich ihrerseits an einer Querleiste abstützen.

Als Stange wird man vorzugsweise ein Metallprofil wählen, insbesondere ein Hohlprofil, z. B. ein Vierkantrohr mit den Abmessungen 80 x 80 x 4 mm. Es besteht vorzugsweise aus Stahl, kann aber auch aus Aluminium oder einem anderen Metall gefertigt sein. Der Biegewiderstand, der sich vorwiegend im Querschnitt ausdrückt, muß genau den Erfordernissen angepaßt sein, insbesondere ist zu unterscheiden zwischen einer Stange, an der die Sicherheitsgurte zweier Personen angeschlossen werden, und einer Stange für nur eine Person. Ferner ist darauf zu achten, daß der Stangenquerschnitt am Anschlußpunkt der Gurte nicht all zu sehr geschwächt wird. Vorzugsweise werden Gurte mittels einer den Stangenquerschnitt umgebenden Lasche befestigt. Außerdem kann der Stangenquerschnitt im Anschlußbereich verstärkt sein.

Während bei der bekannten Gurthaltevorrichtung mit Mittelsäule die Gurtschlösser an dem rahmenartigen Sitzbankgestell befestigt sind, wird erfindungsgemäß vorgeschlagen, die gesamten Kräfte der Sicherheitsgurte dadurch in die Stange einzuleiten, daß diese einen etwa in Sitzhöhe verlaufenden Querholm zur Befestigung der Beckengurte und des unteren Endes der Schultergurte aufweist. Dieser Querholm ist vorzugsweise ein Abkantprofil aus Blech, das eine hohe Biegebeanspruchung bei geringem Gewicht zuläßt.

Ein Ausführungsbeispiel der Erfindung wird nachstehend anhand der Zeichnung erläutert. Im einzelnen zeigt
- Fig. 1: eine schematische Seitenansicht einer Gurtbefestigungsvorrichtung mit einer vertikalen Stange für einen Motorcaravan,
- Fig. 2: einen Vertikalschnitt des oberen Endes der Stange nach Fig. 1 in natürlicher Größe und
- Fig. 3: eine räumliche Darstellung der in den vorhergehenden Figuren gezeigten Stange mit ihrem Querholm.

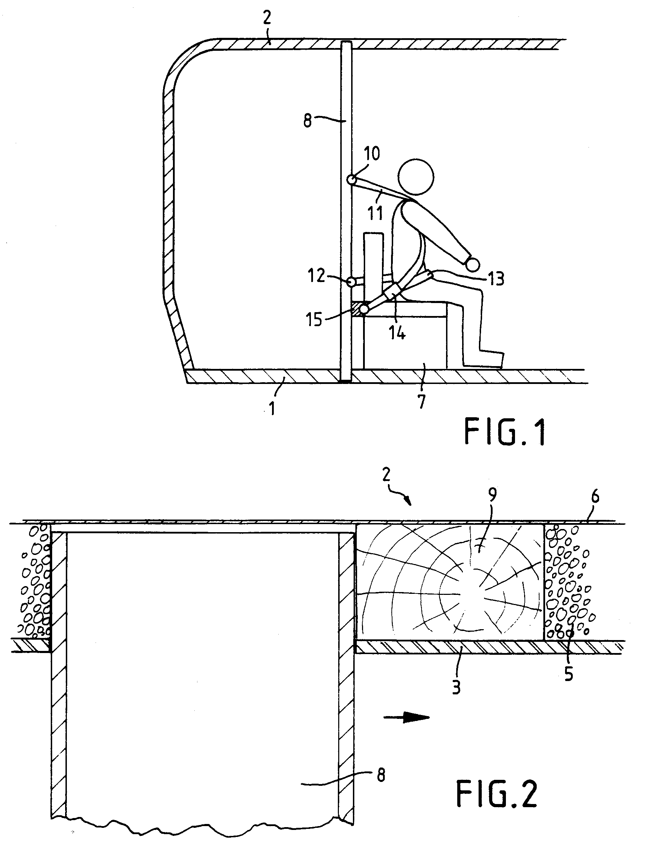

Der in Fig. 1 angedeutete Wohnmobilaufbau hat eine Bodenplatte 1, die wie üblich mehrschichtig ausgeführt ist mit einer 4 mm starken unteren Sperrholzplatte, einer 30 mm-Styropor-Kernschicht und einer 6 mm starken Trittplatte aus 5-fach verleimten Sperrholz. Das Wagendach 2 besteht, wie Fig. 2 zeigt, innen aus 3 mm starkem Sperrholz 3, auf das eine 30 mm-Styropor-Kernschicht 5 folgt, welche nach außen durch ein 0,6 mm starkes Aluminiumblech 6 abgeschlossen ist.

Etwa in der Mitte hinter einer in Fahrtrichtung orientierten Sitzbank 7 für zwei Personen ist ein Vierkantrohr 8 mit einem Querschnitt von 80 x 80 mm und einer Wandstärke von 4 mm vertikal angeordnet. Es greift in entsprechende Aussparungen im Boden und im Dach ein, durchsetzt jedoch nicht die jeweilige Blech-Außenhaut. Dies zeigt am Beispiel des Daches die Fig. 2. Zwischen der Stirnfläche des Vierkantrohres 8 und dem Aluminiumblech 6, das die Dachhaut bildet, ist ein Zwischenraum von einigen Millimetern vorgesehen. In Fahrtrichtung vor dem oberen Ende des Vierkantrohres verläuft eine Holzleiste 9 mit einem Querschnitt von 50 x 30 mm in ganzer Wagenbreite. Sie hat damit die gleiche Dicke wie die Styropor-Kernschicht 5. Der Druck des Vierkantrohres im Kollisionsfall verteilt sich so großflächig auf das Wagendach, wodurch dieses einen beträchtlichen Widerstand bieten kann. Ähnlich sind auch in der Bodenplatte 1 Holzleisten eingebaut, die den Druck verteilen.

Das Vierkantrohr 8 hat einen oberen Anschlußpunkt 10 für zwei Schultergurte 11 und einen unteren Anschlußpunkt 12 für zwei Beckengurte 13. Die beiden anderen Enden des jeweiligen Gurtpaares sind in Gurtschlössern 14 zusammengeführt und diese sind an dem jeweiligen Ende einer Quertraverse 15 befestigt, die etwa in Sitzhöhe mittig mit dem Vierkantrohr 4 zu einem Kreuz verbunden ist.

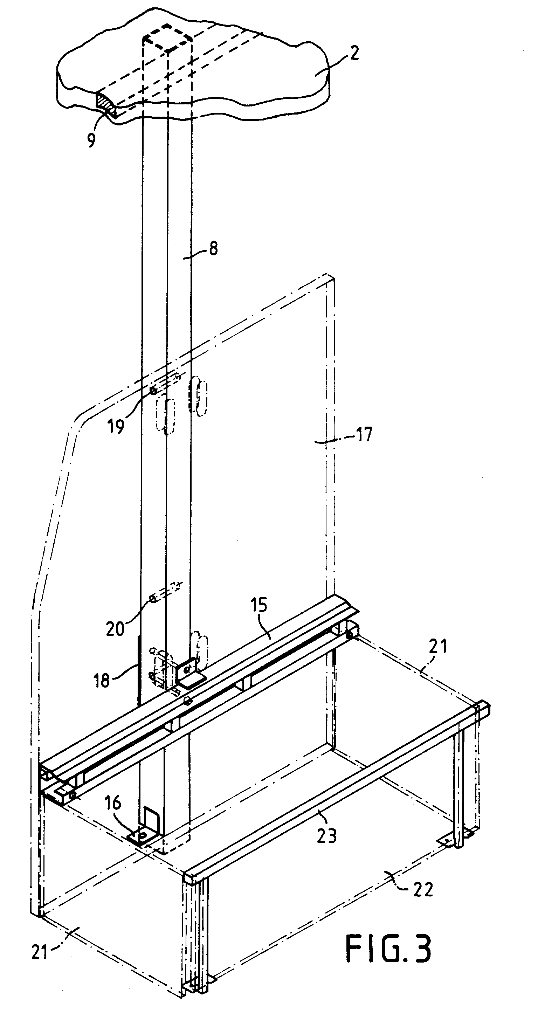

In Fig. 3 ist ein komplettes Befestigungssystem für Sicherheitsgurte mit weiteren Einzelheiten dargestellt. Zur Fixierung der Höhenlage des Vierkantrohres 8 trägt dieses in der Nähe des unteren Endes einen Befestigungswinkel 16, mit dem es auf der Bodenoberfläche aufsteht und verschraubt ist. Zwischen dem Vierkantrohr 8 und der Quertraverse 15, die als Abkantprofil aus Blech ausgebildet ist, befindet sich eine Wand 17. Die Befestigungsschrauben für die Quertraverse gehen durch diese Wand hindurch. Außerdem ist das Vierkantrohr hinten durch eine Platte 18 verstärkt. Die nicht gezeigten Gurte sind mit Hilfe von Querbolzen befestigt, die durch Bohrungen 19 und 20 des Vierkantrohres gesteckt sind. Eine Sitztruhe ist durch Seitenwände 21 und eine Vorderwand 22 angedeutet. Zur Erhöhung der Tragfähigkeit dieser Vorderwand dient ein Stützbügel 23, der am Boden befestigt ist.

Wird das Gurtsystem eines Einzelsitzes an einer Stange angeschlossen, so kann diese, wie erwähnt, einen entsprechend geringeren Querschnitt haben. In jedem Falle weist jedoch die Stange den oberen Befestigungspunkt für den Schultergurt und einen Befestigungspunkt für den Beckengurt auf, während die am Schloß zusammengeführten Gurtenden mittels einer am Boden verankerten Peitsche, mittels eines Gurtbocks oder auf andere geeignete Weise am Fahrzeug befestigt werden.
- 1: Bodenplatte
- 2: Wagendach
- 3: Sperrholz
- 5: Styropor-Kernschicht
- 6: Aluminiumblech
- 7: Sitzbank
- 8: Vierkantrohr
- 9: Holzleiste
- 10: Anschlußpunkt, oben
- 11: Schultergurt
- 12: Anschlußpunkt, unten
- 13: Beckengurt
- 14: Gurtschloß
- 15: Quertraverse
- 16: Befestigungswinkel
- 17: Wand
- 18: Platte
- 19: Bohrung für Schultergurt
- 20: Bohrung für Beckengurt
- 21: Seitenwand
- 22: Vorderwand
- 23: Stützbügel

## Patentansprüche

1. Motorcaravan mit einer Befestigungsvorrichtung für Sicherheitsgurte (11, 13), wobei das Dach (2) und der Boden (1) als mehrschichtige Verbundplatten ausgeführt sind, dadurch gekennzeichnet, daß als Befestigungsvorrichtung eine in den Boden (1) und das Dach (2) eingreifende vertikale Stange (8) vorgesehen ist, und daß in Fahrtrichtung vor den Stangenenden in dem Dach und dem Boden verstärkende Einlagen eingebaut sind, an denen sich die Stange (8) im Kollisionsfall abstützt.

2. Motorcaravan nach Anspruch 1, dadurch gekennzeichnet, daß die Einlagen Holzleisten (9) sind, welche insoweit einen in dem Dach und dem Boden enthaltenen Hartschaumstoff-Kern (5) gleicher Dicke ersetzen.

3. Motorcaravan nach Anspruch 2, dadurch gekennzeichnet, daß die Holzleiste (9) sich quer zur Fahrtrichtung und vorzugsweise über die ganze Wagenbreite erstreckt.

4. Motorcaravan nach Anspruch 1, dadurch gekennzeichnet, daß als Stange (8) ein Vierkant-Hohlprofil aus Stahl mit den Abmessungen 80 x 80 x 4 mm vorgesehen ist.

5. Motorcaravan nach Anspruch 1, dadurch gekennzeichnet, daß die Stange (8) eine etwa in Sitzhöhe verlaufende Quertraverse (15) zur Befestigung der zusammengefaßten Enden der Beckengurte (13) und der Schultergurte (11) aufweist.

## Claims

1. Motor caravan with a fastening device for safety belts (11, 13), wherein the roof (2) and the floor (1) are constructed as multi-layered composite panels, characterised in that a vertical rod (8) engaging into the floor (1) and the roof (2) is provided as fastening device; and that reinforcing inserts are mounted in the roof and the floor in front of the rod ends viewed in the direction of travel for support of the rod (8) in the case of a collision.

2. Motor caravan according to Claim 1, characterised in that the inserts are wooden laths (9), which thus replace a hard foam plastic core (5) of the same thickness contained in the roof and the floor.

3. Motor caravan according to Claim 2, characterised in that the wooden lath (9) extends transversely to the direction of travel and preferably over the entire width of the vehicle.

4. Motor caravan according to Claim 1, characterised in that a hollow hexagon profile made of steel with the dimensions 80 x 80 x 4 mm is provided as the rod (8).

5. Motor caravan according to Claim 1, characterised in that the rod (8) has a cross beam (15) running approximately at seat height for fastening the joined ends of the belt straps around the abdomen (13) and the belt straps across the chest (11).

## Revendications

1. Auto-caravane comportant un dispositif de fixation pour une ceinture de sécurité (11,13), le toit (2) et le plancher (1) étant réalisés sous forme de plaques de liaison à plusieurs couches,
caractérisée en ce que l'on prévoit, comme dispositif de fixation, une barre (8) verticale agissant dans le plancher (1) et dans le toit (2), et en ce que des pièces rapportées de renforcement sont montées, dans le sens de roulement, devant les extrémités de barre dans le toit et dans le plancher, sur lesquelles pièces rapportées la barre (8) prend appui lors d'une collision.

2. Auto-caravane selon la revendication 1,
caractérisée en ce que les pièces rapportées sont des liteaux en bois (9) qui remplacent un noyau (5) de mousse de polyuréthane rigide, contenu dans le toit et dans le plancher, de même épaisseur.

3. Auto-caravane selon la revendication 2,
caractérisée en ce que le liteau en bois (9) s'étend transversalement à la direction de roulement et de préférence sur toute la largeur du véhicule.

4. Auto-caravane selon la revendication 1,
caractérisée en ce que l'on prévoit comme barre (8) un profilé creux carré en métal, présentant les dimensions 80 x 80 x 4 mm.

5. Auto-caravane selon la revendication 1,
caractérisée en ce que la barre (8) comporte une traverse transversale (15) s'étendant à peu près à hauteur de siège, pour la fixation des extrémités réunies de la ceinture de bassin (13) et de la ceinture d'épaule (11).
